# EUROPEAN PATENT APPLICATION

(11) **EP 3 276 983 A1**
(43) Date of publication of application: **31.01.2018**
(21) Application number: 16182016.2
(22) Date of filing: 29.07.2016
(51) Int. Cl.: H04R 25/00

(54) **METHOD FOR FITTING AN AUDIO SIGNAL TO A HEARING DEVICE BASED ON HEARING-RELATED PARAMETER OF THE USER**

(71) Applicant: Mimi Hearing Technologies GmbH, 10178 Berlin (DE)
(72) Inventor: WERNER, Pascal, 97633 Großbardorf (DE); CLARK, Nicholas, Royston, Hertfordshire SG8 9UH (GB); KNOOK, Guido, 10961 Berlin (DE)
(74) Representative: Schulz, Ben Jesko

(57) **Abstract**

The invention relates to a method and a computer program for fitting an audio signal (105) to a users hearing abilities comprising at least the steps of:
- providing at least one hearing-related parameter (1) of the user,
- submitting (101) the hearing-related parameter (1) to a conversion unit (2), wherein the conversion unit (2) determines a set of at least one filter parameter (6) according to the hearing-related parameter (1),
- submitting (104) the set of the at least one filter parameter (6) from the conversion unit (2) to an audio signal filter (3),
- adjusting the audio signal filter (3) according to the set of the at least one filter parameter (6), wherein the audio signal filter (3) is designed to alter a provided audio signal (7) in dependency of the set of the at least one filter parameter (6), such that the audio signal is adjusted to the hearing ability of the user and/or a general preference exhibited by a population cohort,
- providing (105) an audio signal (7) to the audio signal filter (3),
- receiving (106) an altered audio signal (8) from the audio signal filter (3),
- outputting the altered audio signal (8).

## Description

The invention relates to a method, a hearing device, a micro-processor and a computer program for fitting an audio signal to a users hearing ability or hearing preference.

The hearing ability of people differs for many reasons. Sometimes the hearing ability is diminished due to external factors such as the occupational concentration, certain spare time activities, or exposure to loud music or sounds. Another factor contributing to the decrease of the hearing ability is the age of the person; the so-called agerelated hearing loss.

Usually a hearing loss remains untreated as long as the person experiencing said loss is still able to perform the daily tasks sufficiently well. The common way of counterbalancing a hearing loss is the use of a hearing aid that is adjusted based on the results of a hearing test. The hearing test is conducted on the person and oftentimes requires specific loudspeakers, headphones or the like and a controlled and supervised sound environment.

However many people that have experienced a decrease of their hearing ability, particularly due to age, might not submit themselves to a hearing test, as the hearing loss might not yet be sufficiently strong to effectively influence their daily routines. Nonetheless, their hearing ability remains diminished and the hearing experience could be improved.

Many ways are known in the state of the art to improve a hearing experience of a person based on individual hearing tests. Also a variety of hearing tests are available to quantify the degree of hearing impairment.

However, known methods rely on the results of individual hearing tests for fitting a hearing device. That is, most methods are thought to be applicable or are applicable only in cases when the person has submitted herself to a hearing test already, i.e. when personalized data is already available.

US20040264719 A1 for example discloses a method for prescribing the initial setting of signal processing parameters in a hearing aid to the needs of the hearing aid user based on a dataset of the users audiological function, i.e. a hearing test result.

According to this application a first set of data concerning the user's audiological function are gathered and a second set of data indicating the level of cognitive function possessed by the user are gathered and stored in electronic form.

Thus, adjusting a hearing device or an audio signal in general without the knowledge of individual hearing data is particularly problematic, as it is not clear on which general parameter such an adjustment could be based on.

However it is highly desirable to adjust a hearing device or an audio signal to a persons hearing abilities without the need of performing a hearing test.

Alternatively, devices are known in the state of the art (US07186930) for relieving high frequency hearing loss, wherein said devices include a volume control that allows the user to gradually adjust and increase the degree of compensation at a pace which corresponds to their particular need. This approach of fitting an audio signal is however not necessarily delivering the best results, as the volume is increased without taking into account the user specific hearing abilities.

Therefore, the problem underlying the present invention is to provide a method, a device and a computer program allowing the adjustment of an audio signal in the absence of individual hearing data and in potentially uncontrolled noise environments.

This problem is solved by a method having the features of claim 1, a hearing device having the features of claim 12, a micro-processor having the features of claim 13, and a computer program having the features of claim 14. Preferred embodiments are stated in the sub claims.

According to claim 1, a method for fitting an audio signal to a users hearing abilities comprises at least the steps of:
- gathering at least one hearing-related parameter of the user, and particularly store it electronically on a storage device,
- transmitting the hearing-related parameter to a conversion unit, wherein the conversion unit determines or adjusts a set comprising at least one filter parameter according to the hearing-related parameter,
- inputting the set of the at least one filter parameter from the conversion unit to a predefined audio signal filter,
- adjusting the audio signal filter according to the set of the at least one filter parameter, wherein the audio signal filter is designed to alter a provided audio signal in dependency of the set of the at least one filter parameter, such that the audio signal is adjusted to the hearing ability of the user and/or a general preference exhibited by a population cohort,
- providing an audio signal to the audio signal filter,
- receiving filtered audio signal from the audio signal filter,
- outputting the filtered audio signal.

The hearing-related parameter might be any parameter that substantially correlates with a persons hearing abilities. For example the hearing-related parameter can be the age of the user, as the hearing ability correlates with the age.

Thus, the method according to the invention solves the problem according to the invention without the need of individual hearing test results. According to the invention, the hearing experience is alleviated by the provision of a hearing-related parameter. As some parts of a population cohort might exhibit specific sound preferences, e.g. young people might prefer a more bass-sided sound, when for example listening to music, the method according to the invention can also be used for adjusting an audio signal to fit these preferences.

It is also possible to provide more than one hearing-related parameter, such as for example age and sex, in order to be able to provide an even better set of the at least on filter parameter.

The set of the at least one filter parameter is particularly defining the filter characteristics, wherein the filter characteristics particularly depend in a non-linear fashion on the at least one filter parameter of the set of the at least one filter parameter. Typically the set comprises more than one filter parameter.

The conversion unit is not necessarily a separate device, but it can be integrated in the audio signal filter itself. The conversion unit particularly converts the provided hearing-related parameter or the plurality of hearing-related parameters to the corresponding set of at least one filter parameter, wherein said conversion is particularly facilitated by using a look-up table, by communicating with a database, where hearing related parameters are stored in accordance to their corresponding set of at least one filter parameter.

Thus, the conversion unit converts the provided hearing-related parameter to some output data set, that is the set of at least one filter parameter that is needed in order to define or adjust the audio filter characteristics.

The conversion unit is particularly designed to receive the hearing related parameter, to gather or generate the set of filter parameters, and also to communicate with a database that for example stores additional information for computing the set of filter parameters.

The audio signal filter is designed for receiving the set of at least one filter parameter and it is furthermore designed such that the output characteristics are particularly completely defined by the set of the at least one filter parameter. That is, the audio signal filter is completely configurable by the set of the at least one filter parameter. The audio signal filter is therefore capable of altering a provided audio signal when it is primed with a set of the at least one filter parameter.

A predefined audio signal filter is for example a multi-band equalizer, wherein the set of filter parameters comprises the setting of each frequency band. Thus, the term predefined refers to the fact, that particularly the kind or sort of audio signal filter is defined, wherein the sound characteristics of the predefined audio signal filter arte determined by the set of the at least one filter parameter.

Even though an equalizer is one of the simplest embodiments of the audio signal filter, it illustrates the what a set of at least one filter parameter can consist of and how the audio signal filter is adjusted by means of said set.

But also other audio signal filters are conceivable that follow a much more complex characteristic and that requires a different kind of filter parameter set.

As this method can be implemented fully electronically, i.e. for example as a computer program, it is possible that the predefined audio signal filter can be replaced by another predefined audio filter. Thus, it is for example possible to switch from a linear audio signal filter to a non-linear audio signal filter.

Once the specific audio filter is chosen, a corresponding set of filter parameters can be supplied to the audio signal filter by the conversion unit. It is conceivable that the audio signal filter and the conversion unit are comprised in one device.

According to another embodiment of the invention, the conversion unit gathers the set of the at least one filter parameter from a database that stores a plurality of sets of the at least one filter parameter according to the hearing-related parameter, or wherein the conversion unit estimates the set of the at least one filter parameter according to the hearing-related parameter.

This embodiment is particularly advantageous as the database can be updated without the need to alter the filter or the conversion unit.

In case the set of the at least one filter parameter is estimated, computed or determined based on the provided hearing related parameter(s), less storage is required, which for some embodiments might prove advantageous.

The database might be connected hard-wired or wirelessly to the conversion unit. Alternatively the database might be accessible for example via a network, for example the internet or another computer network. The database particularly comprises a storage device.

The database is particularly organized such that the plurality of sets of the at least one filter parameter are stored in accordance with a corresponding hearing-related parameter.

In a variant of the invention, the conversion unit gathers a characteristic hearing-data set, particularly from the database or a second database, according to the at least one hearing-related parameter, wherein the conversion unit is designed such that the set of at the least one filter parameter is determined depending on the characteristic hearing-data set.

Such a dataset might comprise data that have been determined previously from different people and that reflect a hearing-related property, such as an audiogram. Audiograms, for example, are available for various ages and both sexes. From the corresponding audiogram, the set of the at least one filter parameter can be estimated.

It is possible that the conversion unit on the one hand gathers or computes the set of the at least one filter parameter directly and on the other hand also gathers the characteristic hearing-data set from which it also determines a set of the at least one filter parameter.

In this case the conversion unit unifies the two sets of the at least one filter parameter such that only one set of the at least one filter parameter is submitted to the audio signal filter.

It is also conceivable that initially the conversion unit determines the set of the at least on filter parameter from the hearing-data set, and after a database comprising a sufficiently high number of the sets of the at least one filter parameters is set up, the conversion unit switches its operating mode from gathering the hearing-data set to gathering the at least one filter parameter directly.

According to another embodiment of the invention, the characteristic hearing-data set is provided, acquired or generated from a plurality of hearing-data sets acquired from a plurality of people having the same or similar hearing-related parameter.

This embodiment is particularly advantageous as the hearing-data set is particularly based on data of people that are likely to exhibit the same or similar hearing abilities and hearing properties, as they share the same or similar hearing-related parameter.

A similar hearing related-parameter refers particularly to the fact the for example an age difference of one or 2 years is still regarded as similar, as the hearing abilities do not change significantly within 2 years, due to age related hearing loss. Thus a similar hearing-related parameter refers to the fact that the associated hearing ability has not changed more than 10%, particularly not more than 20%, on the respective frequency bands.

From the hearing-data sets of a plurality of people with the same or similar hearing-related parameters, it is possible to derive a good estimation for the set of the at least one filter parameter.

Such a hearing-data set is for example an audiogram that is the average or median of a plurality of audiograms of people having for example the same or similar age

According to another embodiment of the invention, the at least one characteristic hearing-data set comprises an audiogram related to the at least one hearing-related parameter, wherein the audiogram is particularly provided, acquired or generated for the at least one hearing-related parameter, wherein said audiogram is particularly based, for example by averaging, on audiograms of different people with the same or similar at least one hearing-related parameter, and/or particularly wherein the audiogram is based on the norm ISO 7029.

According to another embodiment of the invention, the at least one hearing-related parameter is at least one of:
- a genetic disposition of the user, leading to an altered hearing ability,
- a genomic information of the user,
- a socio-demographic parameter,
- the age of the user,
- the sex of the user,
- a working environment, particularly desktop job or working in, at or on a noisy machine,
- frequent leisure time activities, and/or
- music listening habits, particularly what kind of music and at what loudness level, wherein the kind of music often correlates to the loudness the music is listened to,
- telephone setting preferences, particularly earphone loudness,
- chronic or acute illnesses, that influence the hearing ability,
- prescription and/or recreational drug use, for example alcohol.

People having the same or similar hearing-related parameters, are likely to exhibit a similar hearing ability.

According to another embodiment of the invention, the audio signal filter is a non-linear filter, wherein the non-linear filter particularly comprises at least one of the following audio processing building blocks:
- a single- or multiband dynamics compressor,
- a single- or multiband adaptive gain control,
- a wind-noise reduction,
- a feedback cancellation,
- a noise reduction,
- a source separation,
- a beam forming, and/or
- a speech enhancement audio processing building block.

Non-linear filters are particularly advantageous for improving the hearing experience as the hearing perception and the hearing process in the human ear is non-linear as well.

According to another embodiment of the invention, the method further comprises the step of executing a refining procedure, wherein during the refining procedure the submitted set of the at least one filter parameter is altered and wherein the audio signal filter is adjusted with the altered set of the at least one filter parameter and wherein particularly the altered set of the at least one filter parameter is stored and particularly processed in the database according to the hearing-related parameter.

The refining procedure particularly is a fine-tuning method, that is used to provide a better fitting of the altered audio signal to the users hearing abilities, with this second step (the first step is the provision of the set of the at least one filter parameter by the conversion unit), it is advantageously possible to use a user input to either build or modify the database with the plurality of sets of at least one filter parameters, and also to improve on the hearing experience of the user.

In a variant of the refining procedure, the submitted set of the at least one filter parameter is altered based on the result of a hearing test performed with the user, or by an iterative refining procedure, where the user chooses, particularly repeatedly, based on an improved hearing experience between selected sets of the at least one filter parameter, wherein particularly each selected set of the at least one filter parameter is submitted to the audio signal filter such that the user can listen to the altered audio signal and make a qualified decision about which set of the at least filter parameter is best suited for his hearing experience.

According to another embodiment of the invention, the audio signal filter is provided to a music, a sound, a hearing aid or a mobile phone software, particularly a music or sound playback software, wherein said software provides the audio signal to the audio signal filter and the altered audio signal is then provided to said software, such that the played back sound or music has the altered characteristics of the altered audio signal.

This embodiment is particularly advantageous, as it allows for the incorporation of the method in various applications at different levels.

If the method according to the invention is for example incorporated in a mobile phone software it can be placed such in the software that all audio signals are altered, or that only selected sources experience the filtering of the audio signal, or that even different audio signal filter settings are applied depending on the source or the output device of the audio signal.

The method according to the invention can be incorporated or placed downstream of a music, a sound and/or a voice software.

According to another embodiment of the invention, the altered audio signal is put out to one of the following hearing devices or components:
- a hearing aid,
- a mobile phone,
- a smart phone,
- a headphone,
- a loudspeaker,
- a bone conduction headphone,
- a music or sound software.

According to claim 12 a hearing device's sound characteristics are adjustable by executing the method according to the invention, wherein the hearing device is particularly a smartphone implemented hearing aid, a smartphone controlled hearing aid, a non-medical smartphone controlled hearing device and/or smartphone controlled hearing device with general purpose capabilities.

Such a quick and easy adjustment according to the invention is particularly useful, as it does not require a hearing test or the data from a hearing test, while nonetheless a good fitting of the sound to the personal hearing abilities is provided.

According to the invention also a micro-processor comprising means designed for executing the method according to the invention is provided, wherein said micro-processor is particularly comprised in a hearing device, particularly a hearing aid, a headphone, a smartphone, a non-medical smartphone controlled hearing device and/or smartphone controlled hearing device with general purpose capabilities

Also a computer program comprising program code that, when executed on a computer, executes the method according to the invention, wherein said computer program is particularly executed on a smartphone solves the problem according to the invention.

According to an embodiment of the invention, the computer program displays a graphical user interface to a user, wherein the graphical user interface has an input option, such that the user can select the at least one hearing-related parameter and its value to be provided for adjusting the audio signal filter. This is particularly advantageous as these options are the required parameters for the computer program to be executed properly.

Further features and advantages of the invention shall be described by means of a detailed description of embodiments with reference to the Figures, wherein
- Fig. 1: a schematic circuit depicting the method according to the invention;
- Fig. 2: a schematic circuit depicting a variant of the method according to the invention;
- Fig. 3: shows a schematic circuit of the refining procedure according to the invention; and
- Fig. 4: shows an audiogram.

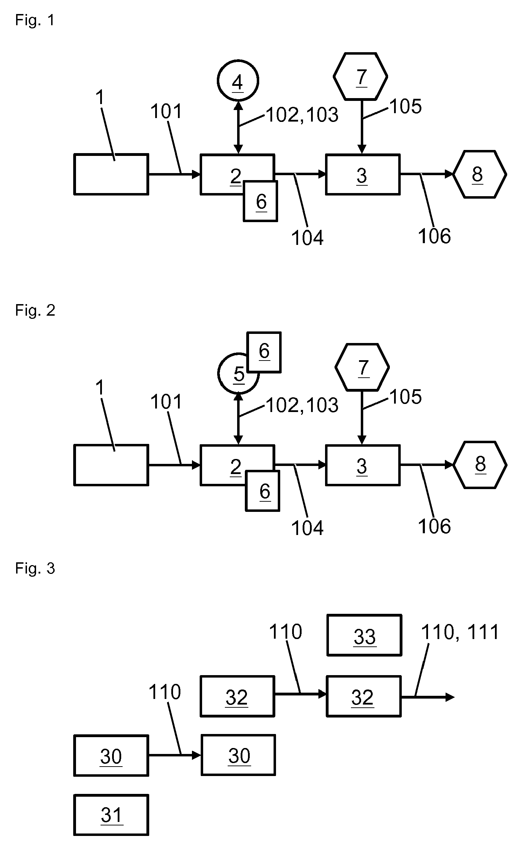

Fig. 1 shows a schematic circuit of the method and the computer program according to the invention. In the example shown, two hearing-related parameters 1, e.g. the age and the sex of the user are provided 101 to the conversion unit 2.

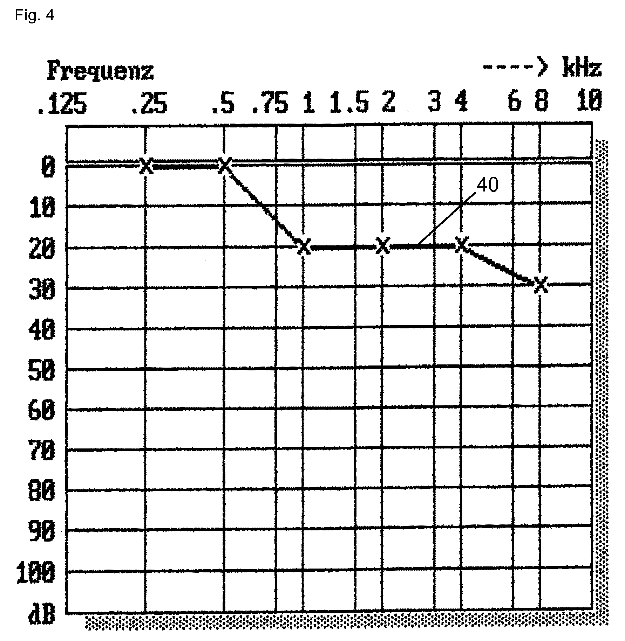

The conversion unit 2 submits 102 the age and the sex of the user to a database 4 where audiograms 40 (see Fig. 4) according to sex and age are stored. From the database 4, the corresponding audiogram 40 is received 103 by the conversion unit. At the conversion unit 2, a set of filter parameters 6 is determined and submitted 104 to the audio signal filter 3.

The audio signal filter 3 is adjusted by means of the set of filter parameters 6, e.g. the gain or compression values for certain frequency bands.

An audio signal 7 is provided 105 to the audio signal filter 3 and altered according to the audio signal filter 3 characteristics, such that the user experiences an improved hearing experience. The altered audio signal 8 is put out 106 by the audio signal filter 3.

The set of filter parameters 6 is for example derived by simply taking into account the deviation from an ideal hearing audiogram from the provided audiogram 40 for each frequency band. The audio signal filter 3 can be an equalizer (in case of a linear audio signal filter) or a non-linear audio signal filter 3 whose frequency bands are adjusted by increasing the frequency bands for which a hearing decrease is present according to the audiogram 40. This simple approach (employing a linear equalizer) however is unlikely to yield satisfactory results, but can serve as a first step. A more satisfactory result can be obtained by using non-linear audio signal filters 3.

Fig. 2 shows an embodiment of the invention that is similar to the one shown in Fig. 1, with the difference that the conversion unit 2 is submitting the hearing-related parameters 1 (age and sex) to a database 5 where the set of filter parameters 6 is stored and thus no additional determination of the set of filter parameters 6 is necessary. The conversion unit 2 then sends set of filter parameters 6 to the audio signal filter 3.

Fig. 3 shows a schematic circuit of the refining procedure. In the example shown, the user can choose 110 between two sets 30, 31 of filter parameters for the audio filter 3 after music and/or sounds have been played back to him, employing the first and then the second set of filter parameters.

Once the user has chosen a set of filter parameters, another round of refining is started, wherein the user now chooses between the previously chosen set of filter parameters 30 and another set of filter parameters 32.

This procedure is repeated (see 32, 33) until the user is satisfied with the result or aborts the procedure.

The lastly chosen set of filter parameters 32 can than be submitted 111 to a database 6, where for different hearing-related parameters sets of filter parameters are stored. In the database 5, the new set of filter parameters 32 is processed such that next time a user with the same or similar hearing-related parameters 1 will retrieve an optimized set of filter parameters 32 for the audio signal filter 3. This way a continuous improvement is achieved without ever conducting a hearing test.

Fig. 4 shows an audiogram 40 according to the state of the art, from which the set of filter parameters is derived. On the x-axis the sound frequencies are plotted, wherein on the y-axis the decrease of the hearing ability is plotted in units of dB.

### Example 1:

An application of the method according to the invention is during flight in an airplane or when traveling in a train comprising personal on-board entertainment systems that are equipped with a computer program according to the invention.

The user of the personal on-board entertainment system has to provide at least one hearing-related parameter, for example his age, to the on-board entertainment system.

Based on this input the audio signal will be altered according to the invention and played back when the on-board entertainment system is in use. This way the user will be provided with an improved hearing experience. The user can also proceed to conduct the refining procedure, such that the users hearing experience is even more improved.

### Example 2:

In this example the method according to the invention is executed on a mobile device, such as for example a smart phone, or some other computer. The hearing-related parameters of the user are provided by apps or programs that are installed on the mobile device or computer. Such apps or programs link for example to social media accounts of the user. These accounts provide the method according to the invention with the hearing-related parameter, such as for example age, sex, spare-time activities, listening habits and so forth. Once the hearing-related parameters are provided to the conversion unit, the method according to the invention is carried out according to one of the various embodiments.

## Claims

1. Method for fitting an audio signal (105) to a users hearing abilities comprising at least the steps of:
- providing at least one hearing-related parameter (1) of the user,
- submitting (101) the at least one hearing-related parameter (1) to a conversion unit (2), wherein the conversion unit (2) determines a set of at least one filter parameter (6) according to the at least one hearing-related parameter (1),
- submitting (104) the set of the at least one filter parameter (6) from the conversion unit (2) to an audio signal filter (3),
- adjusting the audio signal filter (3) according to the set of the at least one filter parameter (6), wherein the audio signal filter (3) is designed to alter a provided audio signal (7) in dependency of the set of the at least one filter parameter (6), such that the audio signal is adjusted to the hearing ability of the user and/or a general preference exhibited by a population cohort,
- providing (105) an audio signal (7) to the audio signal filter (3),
- receiving (106) an altered audio signal (8) from the audio signal filter (3),
- outputting the altered audio signal (8).

2. Method according to claim 1, wherein the conversion unit (2) gathers (102, 103) the set of the at least one filter parameter (6) from a database (5) that stores a plurality of sets of the at least one filter parameter in dependency of hearing-related parameters, or wherein the conversion unit (2) estimates the set of the at least one filter parameter (6) according to the submitted hearing-related parameter (1).

3. Method according to claim 1 or 2, wherein the conversion unit (2) gathers (102, 103) a characteristic hearing-data set (40) according to the at least one hearing-related parameter (1), wherein the conversion unit (2) is designed such that the set of at least one filter parameter (6) is determined by the conversion unit (2) depending on the characteristic hearing-data set (40).

4. Method according to claim 3, wherein the characteristic hearing-data set (40) is provided, acquired or generated from a plurality of hearing data sets acquired from a plurality of people having provided the same or a similar hearing-related parameter.

5. Method according to one of the claims 3 or 4, wherein the at least one characteristic hearing-data set (40) comprises an audiogram related to the at least one hearing-related parameter (1), wherein the audiogram is particularly provided, acquired or generated for the at least one hearing-related parameter (1), wherein said audiogram is particularly based on audiograms of different people with the same or a similar at least one hearing-related parameter (1), and/or particularly wherein the audiogram is based on the norm ISO 7029.

6. Method according to one of the preceding claims, wherein the at least one hearing-related parameter (1) is one of:
- a genetic disposition,
- a genomic information,
- a socio-demographic parameter,
- the age of the user,
- the sex of the user,
- a working environment,
- frequent leisure time activities, and/or
- music listening habits,
- telephone setting preferences, particularly earphone loudness,
- chronic or acute illnesses,
- prescription and/or recreational drug use.

7. Method according to one of the preceding claims, wherein the audio signal filter (3) is a non-linear filter, wherein the non-linear filter particularly comprises at least one from the following audio processing building blocks:
- a single- or multiband dynamics compressor,
- a single- or multiband adaptive gain control,
- a wind-noise reduction,
- a feedback cancellation,
- a noise reduction,
- a source separation,
- a beam forming, and/or
- a speech enhancement audio processing building block.

8. Method according to one of the preceding claims, wherein the method further comprises the step of executing a refining procedure, wherein during the refining procedure the submitted set of the at least one filter parameter is altered and wherein the audio signal filter is adjusted with the altered set of the at least one filter parameter and wherein particularly the altered set of the at least one filter parameter is stored and particularly processed in the database according to the hearing-related parameter.

9. Method according to claim 8, wherein the submitted set of the at least one filter parameter is altered based on the result of a hearing test performed with the user, or by an iterative procedure, where the user choses based on an improved hearing experience between differently adjusted audio filters, wherein the differently adjusted audio filters are based on different sets of the at least one filter parameter.

10. Method according to one of the preceding claims, wherein the audio signal filter (3) is provided to a music, a sound, a hearing aid or a mobile phone software, particularly a music or sound playback software, wherein said software provides the audio signal (7) to the audio signal filter (3) and the altered audio signal (8) is then provided to said software, such that the played back sound or music has the altered characteristics of the altered audio signal (8).

11. Method according to one of the preceding claims, wherein the altered audio signal (8) is provided to one of the following hearing devices or components:
- a hearing aid,
- a mobile phone,
- a smart phone,
- a headphone,
- a loudspeaker,
- a bone conduction headphone,
- a music or sound software

12. Hearing device, wherein the hearing device sound characteristics are adjustable by executing the method according to one of the claims 1 to 11, wherein the hearing device is particularly a smartphone implemented hearing aid, a smartphone controlled hearing aid, a non-medical smartphone controlled hearing device and/or smartphone controlled hearing device with general purpose capabilities.

13. Micro-Processor comprising means designed for executing the method according to claim 1 to 11, wherein said micro-processor is particularly comprised in a hearing device, particularly a hearing aid, a headphone, or a smartphone.

14. Computer program comprising program code that, when executed on a computer, executes the method according to claim 1 to 11, wherein said computer program is particularly executed on a smartphone.

15. Computer program according to claim 14, wherein the computer program displays a graphical user interface to a user, wherein the graphical user interface has an input option, such that the user can select the at least one hearing-related parameter and its value to be provided for adjusting the audio signal filter.
